# EUROPÄISCHE PATENTSCHRIFT

(11) **EP 2 570 655 B1**
(45) Veröffentlichungstag und Bekanntmachung des Hinweises auf die Patenterteilung: **11.11.2015**
(21) Anmeldenummer: 11007567.8
(22) Anmeldetag: 16.09.2011
(51) Int. Cl.: F03D 7/02

(54) **Vorrichtung zum aktiven Verstellen eines Blattes einer (Klein) windenergieanlage**
Device for active adjustment of a blade for small-scale wind energy assembly
Dispositif de réglage actif d'une pale de (petite) éolienne

(43) Veröffentlichungstag der Anmeldung: 20.03.2013
(73) Patentinhaber: IMO Holding GmbH, 91350 Gremsdorf (DE)
(72) Erfinder: Klinner, Uwe, 91301 Forchheim (DE)
(74) Vertreter: Küchler, Stefan

(56) Entgegenhaltungen:
- EP-A2- 1 959 129
- US-A1- 2011 142 618
- "How Wind Power Works", , 31. Oktober 2010 (2010-10-31), XP55021771, Gefunden im Internet: URL:http://web.archive.org/web/20101004160 223/http://science.howstuffworks.com/envir onmental/green-science/wind-power4.htm [gefunden am 2012-03-13]

## Beschreibung

Die Erfindung bezieht sich auf ein System beziehungsweise eine Vorrichtung zum aktiven Verstellen eines Blattes einer (Klein-) Windenergieanlage, insbesondere für Windenergieanlagen mit einer Leistung von insgesamt weniger als 250 kW, im Besonderen sogar weniger als 200 kW, entsprechend den Patentansprüchen. Ebenso wird eine (Klein-) Windenergieanlage beschrieben, die mehrere solcher erfindungsgemäßen Vorrichtungen enthält. Insbesondere betrifft die Erfindung eine Baugruppe zum aktiven Verstellen je eines Blattes einer Kleinwindenergieanlage gegenüber deren Nabe, umfassend eine Drehverbindung mit zwei gegeneinander verdrehbaren, auf Wälzkörpern abrollenden Wälzlagerringen, von denen einer mit einem Blatt, der andere mit der Nabe der Kleinwindenergieanlage verbunden ist, ferner ein Gehäuse mit wenigstens zwei die Baugruppe versteifende Gehäuse- oder Zwischenscheiben, sowie eine im Inneren des Gehäuses aufgenommene Verstellmechanik in Form einer Verzahnung an dem Innenumfang des kleineren, innen liegenden Wälzlagerringes sowie eines zu dessen Antrieb darin eingreifenden Ritzels, wobei sich die Verstellmechanik zwischen einer oberen Gehäuse- oder Zwischenscheibe und einer unteren Gehäuse- oder Zwischenscheibe befindet.

Durch die Erfindung wird eine kompakte Baugruppe bereit gestellt, welche die aktive und individuelle Verstellung je eines Blattes ermöglicht. Dabei ist jede solche Vorrichtung als kompakte und einbaufertige Baugruppe ausgestaltet welche an den Schaft des Blattes, zwischen Nabe und Blatt, angebracht werden kann, wobei jedes Blatt durch eine separate Mechanik im Inneren der Baugruppe aktiv und unabhängig von der jeweiligen Verstellung der anderen vorhandenen Blätter verstellt werden kann.

### Stand der Technik und Abgrenzung:

Aktuell existieren Windkraftanlagen, auch Windenergieanlagen oder Windkraftkonverter (kurz: "WEA" oder "WKK"), genannt, in verschiedensten Ausführungen, Größen und Formen. Grosse Windenergieanlagen werden aktuell von etwa einem Dutzend namhafter und international vertretener Grosshersteller in Serienproduktion angeboten und projektiert, gefertigt und aufgestellt. Die Projektierung von Großwindanlagen (u.A. steht GROWIAN für ein Großwindanlagenprojekt einer Zweiblattanlage) geht laut einer Projektarbeit der Fachhochschule Augsburg (Hafner, Moutzouris [--]) auf die 70er und 80er Jahre zurück. Das Bundesministerium für Forschung und Technologie (BMFT) begann damals Forschungen im Windkraftbereich zu fördern. Eine eigens gegründete GmbH aus drei Energieversorgungsunternehmen, der HEW, der RWE und der SCHLESWAG konnte im Januar 1983 eine 3,0 MW GROWIAN - Anlage in der norddeutschen Eibe-Mündung in Betrieb nehmen. Auch heute stehen solche modernen Großwindanlagen häufig im Verbund in Gewässern in Küstennähe oder im Meer (engl.: "Offshore-Windparks"), als auch auf dem Land (engl.: "Onshore"). Wichtig bei der Standortwahl ist eine Region mit höheren Windgeschwindigkeiten. Die Energieausbeute solcher moderner Großwindanlagen beträgt im Regelfalle bis zu einigen Megawatt. Moderne Großwindanlagen erreichen etwa zwischen mind. 0,5 MW bis etwa max. 7,5 MW.

Frühere Großwindenergieanlagen sowie auch kleinere Windenergieanlagen aus den Anfängen der Windenergienutzung (beispielsweise die genannte GROWIAN Anlage, die Monopteros Anlage, oder die 10kW bis 30 kW MAN-Aeroman Anlagen, etc.) verfügten über ein, zwei bis n-fache Anzahl installierter Rotortblätter, heutzutage hat sich aber auch aus Geräuschgründen und optischen Gründen, das Standard-Design mit 3 Blättern durchgesetzt.

Neben diesen Großwindanlagen hat sich der Markt für kleinere Windkraftanlagen oder kleinere Windenergieanlagen (kurz: "Klein-WEA" oder "KWEA"), welche in Form von traditionellen "Holland"-Windmühlen, den zweiflügeligen "Hütter-Rotoren" von 1957 oder den amerikanischen Farm-Wind(kraft)rädern (vgl. auch die ca. 20 Meter hohe 12kW-Anlage im amerikanischen Cleveland von 1887) schon seit der Historie bestanden, weiter entwickelt. Solche kleineren Anlagen liefern zwar einerseits eine geringere Energieausbeute als Großwindanlagen, sind aber andererseits einfacher und kostengünstiger zu produzieren, zu montieren, zu warten. Kleinwindanlagen, gelegentlich auch als Windgeneratoren bezeichnet, weisen wesentlich niedrigere Kennwerte auf bezüglich Baugröße, Energieausbeute (Leistung), und Materialaufwand als Großwindanlagen und sind beispielsweise als Heim- oder Kleinwindenergieanlagen zur Erzeugung elektrischer Energie, beispielsweise etwa für den netzunabhängigen Betrieb von Niedrigspannungsgeräten, in Betrieb. Kleinwindanlagen grenzen sich häufig durch individuelle Konstruktionen und einer höheren Vielfältigkeit im Design von den regulären serienartig produzierten Großwindanlagen ab. So zeigt beispielsweise die DE 10252759 eine solche nichtstandardgemäße Kleinwindkraftanlage, insbesondere mit selbstregelnden segeltuchartigen Rotorblättern zum Zwecke der Energieerzeugung für Einzelabnehmer, beispielsweise zur Beheizung von Warmwasseranlagen in Haushalten und Betrieben sowie zur Betreibung von Wasserpumpen. Ein weiteres Abgrenzungsmerkmal zwischen den oben genannten modernen Großwindanlagen ist die Nabenhöhe, die bei großen Windenergieanlagen stets möglichst in linearen Strömungsbereichen liegt, während Kleinwindenergieanlagen aufgrund der zumeist geringen Höhe in turbulenten Strömungsbereichen über dem Grund aufgestellt oder angebracht sind. Die DE 102009015669 beschreibt beispielsweise den Gattungsbegriff einer Kleinwindkraftanlage, bestehend aus einer Laufradnabe und Laufschaufeln eines axialen Laufrades, einem Generator und einem Aufleger, die in, an, auf oder zwischen Gebäuden installiert wird. Zudem verfügen Kleinwindenergieanlagen über Rotordurchmesser von in der Regel bis zu etwa 20 Metern. Da bei Kleinwindanlagen (wesentlich) weniger Materialeinsatz vorherrscht, sind auch die Anschaffungskosten im Vergleich zu den Großwindanlagen (wesentlich) niedriger. Typische Kleinwindanlagen werden auf Produktionsgeländen errichtet, oder auf landwirtschaftlichem Gelände, oder auch auf den domestischen Geländen von Einzelverbraucher, die fern von installierten Stromnetzen leben. Häufig werden Kleinwindenergieanlagen demnach auch als Energiequellen für Insellösungen zum netzautarken Betrieb eingesetzt.

Die Abgrenzung zwischen Großwindanlage und Kleinwindanlage ist aktuell jedoch noch nicht eindeutig. Im Regelfall wird auf die Norm EN 61400-2 verwiesen oder eine Unterscheidung aufgrund der Nabenhöhe oder nach der Leistung getroffen. So nennt der Bundesverband für Kleinwindanlagen BVKW (Bundesverband Kleinwindanlagen [2010]) viele unterschiedliche Definitionen bis hin zu 500 kW Nennleistung für Kleinwindanlagen. Der Bundesverband Kleinwindanlagen strebt (noch) eine in Europa abgestimmte Definition nach folgender Einteilung an. Kleinwindanlagen sind windgetriebene Anlagen mit einer Windangriffsfläche von bis zu 200 m² (beschrieben in EN 61400-2). Die Kleinwindanlagen werden innerhalb dieses Normstandards unterteilt in:
- Micro-Windturbinen (maximal 1,5 kW Nennleistung bzw. 6 m² Windangriffsfläche);
- Hausanlagen auf dem Dach oder direkt mit dem Haus verbunden als Nebengebäude ohne Größenbeschränkungen dem Gebäude angepasst;
- Kleinwindanlagen zur Selbstversorgung bis einschließlich 6 kW Nennleistung;
- Kleinwindanlagen bis maximal 200 m² Windangriffsfläche (EN 61400-2).

Der zweite Vorsitzende des Bundesverbandes Kleinwindanlagen BVKW (Schwieger, Hahn, BVKW [2011]) definiert kürzlich seine Sichtweise zur Abgrenzung von KWEA in einem Interview: "Bedingt durch die unterschiedliche Bau-Gesetzgebung in den Bundesländern gab es bisher keine einheitlichen Kriterien für KWEAs. Zunehmend setzt sich jedoch die Definition aus der europaweit gültigen Norm EN 61400-2 durch, die Kleinwindanlagen bis 200 m² Rotorfläche (16 m Rotordurchmesser) definiert. Dabei werden sie in 2 Klassen unterteilt: Bis 40 m² Rotorfläche und von 40 bis 200 m². Wesentlich ist auch die Bauhöhe. Mittlerweile wird in fast allen Bundesländern die sogenannte "Raumbedeutsamkeit" für Bauwerke ab 30 m Höhe definiert. Das heißt, Kleinwindanlagen unter 30 m Bauhöhe (gemessen bis zur Flügelspitze) beeinträchtigen das weiträumige Landschaftsbild nicht. Sie sind nicht höher als ein größerer Baumbestand, sodass sie sich harmonisch in die Umgebung integrieren können, insbesondere wenn sie optisch ansprechend gestaltet sind. Moderne Großwindanlagen können dagegen über 180 m Bauhöhe und über 10.000 m² Rotorfläche erreichen.

Der Bundesverband Windenergie e.V. (BWE) hingegen klassifiziert Kleinwindanlagen im Wesentlichen nach der Leistung und geht dabei bis immerhin 200 kW."

Auch Hughes, Leovac, Mayr, et.al [2008] weisen auf die IEC-Norm 61400-2 hin, die die Grenze zwischen kleinen und großen Windturbinen definiert. Laut dieser Norm ist eine Anlage mit weniger als 200 m² Rotorfläche und einer spezifischen Leistung von 350 W/m² als Klein-WEA eingestuft.

Von den unterschiedlichen Baugrößen bei Großwindanlagen und KWEA abgesehen, sind bei modernen KWEA nach dem Standard-Design mit 3 Rotorblättern, als auch bei modernen Großwindanlagen nach dem Standard-Design mit 3 Rotorblättern, jeweils stets die folgenden Grundkomponenten gleichermaßen vorhanden:

| | |
|---|---|
| Erstens: | Turm/Mast/Aufständerungsstruktur; |
| Zweitens: | Gondel oder Maschinenträger/Maschinenhaus mit integriertem oder angeschlossenem Energiewandler/Generator; |
| Drittens: | Nabe; |
| Viertens: | Mehrere Rotorblätter, jeweils in gleichem Winkelabstand zueinander angeordnet und jeweils an die Nabe angeschlossen; |
| Fünftens: | Bremse; |
| Sechstens: | Ggf. Sensorik/ Instrumente zur Wind-/Strömungsbestimmung; und ggf. |
| Siebtens: | Aktor(-en) zur optimalen Nachstellung/Drehung der Anlage in den Wind oder aus dem Wind. |

Ein wichtiges Abgrenzungskriterium zwischen Großwindanlagen und Kleinwindanlagen, welches in Literatur oder Normung kaum genannt wird, ist die Begehbarkeit der Anlage. Großwindanlagen nach dem modernen Standard-Design sind demnach stets innen begehbar, das heißt, die Gondel oder das Maschinenhaus ist in der Regel über eine Leiter (im Turm) für Personen, wie etwa technisches Servicepersonal, erreichbar. In der Gondel oder dem Maschinenhaus können beispielsweise Servicetechniker Reparatur- und Wartungsarbeiten durchführen. Moderne KWEA nach dem Standard-Design hingegen sind in der Gondel oder dem Maschinenträger beziehungsweise dem Turm/Mast regulär nicht begehbar.

Kleinwindanlagen werden jedoch bei Weitem nicht nur in Deutschland diskutiert und klassifiziert, entwickelt und projektiert: Ein typischer internationaler Anbieter von (nicht begehbaren) Kleinwindanlagen ist die irische Firma C & F Green Energy. Die anbieterseitig genannten technischen Daten für eine 50 kW KWEA liegen dort beispielsweise bei (CFGREENENERGY, C50 [2011]): Rotordurchmesser: 20 m; Nabenhöhe: 29 m; max. Leistung: 50 kW.

Im Rahmen der vorliegenden Beschreibung werden als Richtwerte für die Abgrenzung zwischen Großwindanlagen und Kleinwindanlagen, die obigen Erkenntnisse zusammenfassend, abschließend die folgenden Grenzwerte angenommen:

| | |
|---|---|
| Leistung der Anlage: | Mehr als ca. 200 bis 250 kW; oder |
| Rotordurchmesser: | Mehr als ca. 20 m; oder |
| Nabenhöhe: | Mehr als ca. 40 m; oder |
| max. Bauhöhe (inkl. Flügelradius): | Mehr als ca. 50 m; oder |
| Begehbarkeit der Windenergieanlage, beziehungsweise der Gondel oder des Maschinenträgers. | |

Moderne Windenergieanlagen mit mehreren Blättern, beispielsweise nach dem Standard-Design mit 3 Blättern, bei denen diese obigen Grenzwerte oder Kriterien nicht erfüllt sind, werden im Sinne der vorliegenden Ausarbeitung demnach grundsätzlich als Kleinwindenergieanlagen (KWEA) betrachtet.

### Technische Aufgabe und aktuelle Nachteile und Probleme:

Bei großen Windenergieanlagen existieren diverse Mechanismen zur Verstellung (engl.: "pitching") der Blätter. Die allgemeine Aufgabe ist es, jeweils abhängig von den herrschenden Windverhältnissen einen möglichst optimalen Betrieb der WEA zu gewährleisten und um im Notfall, etwa bei Verlust des Triebstranges, eine sofortige Notverstellung zu ermöglichen.

Diese diversen Mechanismen zur Blattverstellung sind i. A. nicht obligatorisch, jedoch bei Großwindanlagen stark und zunehmend sehr verbreitet.

Nach Hau (ETAPLAN, Hau [2003]) verfügen große Windkraftanlagen in der Regel über Rotoren mit Blatteinstellwinkelregelung. Die primäre Aufgabe (des Blatteinstellwinkelmechanismus) sei die Verstellung des Blatteinstellwinkels zur Leistungs- und Drehzahlregelung des Rotors. Die Art des Blattverstellantriebes bildet dabei das wesentliche Unterscheidungsmerkmal der Blattverstellsysteme. Grundsätzlich sind hydraulische oder elektrische Verstellantriebe im Einsatz.

Nach Adelhardt (Adelhardt [2011]) müssen Windkraftanlagen mit einer Leistung bis zu 5,0 MW ihre Ausrichtung den Windverhältnissen anpassen. Turm und Rotorblätter werden dabei so eingestellt, dass sie die Windverhältnisse optimal ausnutzen und gleichzeitig keinen zu extremen Belastungen ausgesetzt sind, die zu Schäden führen könnten. Turm- und Blattverstellung sind somit eine wesentliche Voraussetzung für die Wirtschaftlichkeit von Windkraftanlagen.

Prof. Dr. R. Simon erläutert (Simon, Riederer, Meurer [2010], Seite 20) den Effekt des Pitchings- / der Blattverstellung zum Zweck der Leistungsbegrenzung, um Schäden an der Großwindanlage vorzubeugen: "(...) Bei Pitch-geregelten Anlagen erfolgt die Leistungsbegrenzung durch ein Verstellen des Anstellwinkels an den Rotorblättern. Durch einen niedrigen Anstellwinkel an den Rotorblättern wird eine geringe Auftriebskraft erzeugt. Die Rotorblätter drehen langsamer und die Anlagenleistung ist dementsprechend gering. Bei schwachen Windgeschwindigkeiten von 0-4 m/s stehen die Blätter in Fahnenstellung. Der Pitchwinkel beträgt hierbei 90°. Nimmt die Windgeschwindigkeit zu, stellt sich der Anstellwinkel auf 0° ein. Bei starkem Winden von 13 bis 25 m/s muss die Anlage in ihrer Leistung her begrenzt werden. Der Pitchwinkel nimmt mit steigender Windgeschwindigkeit zu und liegt im Bereich von 0-30°. Muss die Anlage abgeschaltet werden, stellen sich die Rotorblätter wieder in die Fahnenstellung. Eine weitere Möglichkeit, die Leistung einer Windkraftanlage zu begrenzen, ist die Aktive Stall Regelung. Hierbei wird der Stall-Effekt durch das Verdrehen der Rotorblätter erzeugt. Die Rotorblattverdrehung erfolgt ähnlich wie im Pitch-System, jedoch in die Rotorebene hinein und mit einem kleineren Anstellwinkel. Bei sehr kleinen Windkraftanlagen wird die Leistungsbegrenzung oft durch eine Querfahne hervorgerufen. (...)"

Bei modernen Großwindanlagen existieren Möglichkeiten der Einzelblattverstellung. Eine individuelle und zyklische Blattverstellung bei WEA ist empfehlenswert, da aufgrund der sehr großen Rotordurchmesser (teilweise Durchmesser von mehr als 120 m) sogar während einer Umdrehung die Blätter unterschiedlichen Höhenlagen und somit unterschiedlichen Windgeschwindigkeiten ausgesetzt sind.

Diese individuelle oder Einzelblattverstellung wird in der Regel vor Allem dadurch ermöglicht, dass in Großwindanlagen ausreichend Platz zur Verfügung steht, um Verstellaggregate- und Mechanismen anzubringen beziehungsweise in die Anlage zu integrieren. In Großwindanlagen werden in der Regel, im Gegensatz zu KWEA, Großwälzlager verwendet, durch welche die Relatiwerstellung des Blattes zur Anschlusskonstruktion realisiert werden kann. Beispielsweise fertigen auf Großwälzlager spezialisierte Unternehmen, etwa der auf Windenergie spezialisierte Teil der IMO Unternehmensgruppe, solche Großwälzlager für die Verstellung von Rotorblätter Drehverbindungen bis zu einem Außendurchmesser von 4.000 und größer. Hierbei handelt es sich stets um mehrreihige Großwälzlager nach dem aktuellem Stand der Entwicklung, beispielsweise beschrieben durch die DE 20 2007 011 577 U1 von IMO oder auch durch die IMO DE 10 2008 009 740. Bei Großwindanlagen wird die Blattverstellung durch Stellglieder vorgenommen.

Nach Hau (ETAPLAN, Hau [2003]) hängt die Bauart der Stellglieder zum einen von der Art der gewählten Antriebsaggregate (elektrisch oder hydraulisch) ab, und zum anderen von der räumlichen Anordnung des Blattverstellantriebs im Maschinenhaus oder in der Rotornabe. Direkt auf die Blätter wirkende, hydraulische Stellzylinder seien insofern die einfachste Lösung, als sie Antriebsaggregate und Stellglieder zugleich sind. Werden statt direkt wirkenden Stellzylindern andere Verstellantriebe eingesetzt, ergibt sich die Notwendigkeit, über mechanische Stellglieder die Stellbewegungen für die Rotorblätter herbeizuführen.

Blattverstellmöglichkeiten für (Groß-) Windenergieanlagen aus den 1990er Jahren bis etwa heute sind beispielsweise aufgezeigt in dem Stand der Technik gemäß der DE 102004046260 der Firma NORDEX, der DE 10140793 von GENERAL ELECTRIC, der DE 10146968 von BOSCH, der DE 19644705 der PREUSSAG, DE 4221783 von Prof. Klinger oder auch in der DE 10044262. Eine Ausgestaltungsart der heutzutage technikgemäßen elektrischen Ankopplung ist aufgezeigt in der DE 102006023411 von BOSCH. Ältere Verstellmöglichkeiten nach dem heute nicht mehr stets üblichen Aktiv-Stall Prinzip können, zum dem Zwecke der Vollständigkeit, in der DE 19626402 von AERODYN aus der Mitte der 1990er Jahre nachgelesen werden.

In modernen KWEA hingegen besteht die Möglichkeit einer Einzelblattverstellung (zumeinst aufgrund des sehr begrenzten Platzes) bisher nicht. Dies führt zu Nachteilen in Ausbeute und somit in Wirtschaftlichkeit von KWEA. Dies ist für die Praxis eindeutig von Nachteil.

Hau führt in seinem Kompendium (ETAPLAN, Hau [2003], Seite 353, vgl. Bild 9.33) ein Bild-/Zeichnungsbeispiel zu den Blattverstellmöglichkeiten einer KWEA vom Typ Aeroman an, welche eine Möglichkeit andeutet, mittels Stellgliedern eine Blattverstellung zu realisieren. Die Patentdokumente DE 3544814 sowie EP 0226052 , welche von der Firma MAN seinerzeit eingereicht wurden, als der MAN-Aeroman produziert wurde, zeigen die damals in den 1980er Jahren vorherrschende Technik einer Nabe im Querschnitt.

Bei KWEA sind die Verstellmöglichkeiten im Vergleich zu Großwindenergieanlagen unterschiedlich. Wie erwähnt werden hier keine gegenseitig verdrehbaren Wälzlagerringe in Form von Drehverbindungen oder Momentenlagern verwendet, um eine Blattverstellung zu realisieren. Auch direkt wirkende hydraulische Stellzylinder werden nicht verwendet. Eine moderne individuelle Blattverstellung wird bei KWEA grundsätzlich nicht vorgenommen. Eine solche ist aufgrund des geringeren vorhandenen Platzes innerhalb des Maschinenträgers in der Regel auch kaum durchführbar. Eine Blattverstellung erfolgt bislang aufgrund des minimalen Platzangebotes in KWEA daher gelegentlich mittels einem vereinfachten Gesamtverstellmechanismus aus Gestängen und Schubstangen beziehungsweise Stellgliedern, über den alle Blätter durch eine einzige Verstelloperation zeitgleich und um den jeweils gleichen Betrag verstellt werden, oder über passive Verstellmechanismen.

Die soeben genannte vereinfachte Verstellmimik, über den alle Blätter durch eine einzige Verstelloperation zeitgleich und um den jeweils gleichen Betrag verstellt werden, wird zumeist durch einen zentral angeordneten mechanischen Mechanismus erreicht, der entweder auf der Hinterseite des Maschinenträgers liegt, etwa zentral angeordnet ist, oder in die Nabe integriert und ebenfalls zentral angeordnet ist.

Fazit: Falls bei aktuellen KWEA eine Blattverstellung überhaupt möglich ist, dann wird diese als stets kommunale oder pauschale Blattverstellung ausgeführt, oder als passive Blattverstellung. Eine individuelle Blattverstellung wird bei KWEA grundsätzlich nicht vorgenommen, welches einen Nachteil darstellt. Dies ist insbesondere in Bezug auf Wirtschaftlichkeit von aktuellen Kleinwindkraftanlagen von Nachteil.

Laut aktuellem Stand der Technik (CFGREENENERGY, TECHINFO [2011]) erfolgt diese kommunale oder pauschale Verstellung der Blätter bislang beispielsweise durch einen zentral vorhandenen Blattverstellmechanismus (engl.: "blade pitch control").

Dieser Blattverstellmechanismus wirkt in den meisten Ausführungsformen über eine horizontale Strebe inmitten der rotierenden Welle dieser KWEA. Der Blattverstellmechanismus wird über einen Aktor bei Bedarf der Blattverstellung angeregt. An dieser horizontalen Strebe sind im Bereich der Nabe stabförmige Verstellglieder angeordnet, welche im Blattschaftbereich gelenkig mit den Blattflügeln der KWEA verbunden sind und auch an der Strebe gelenkig verbunden sind. Wird die horizontale Strebe inmitten der rotierenden Welle also axial bewegt, etwa durch den Aktor angeregt nach vorne geschoben oder beispielsweise bei Umkehrung der Aktoransteuerung nach hinten gezogen, so werden die stabförmigen Verstellglieder in der Nabe, welche mit den Blattschäften verbunden sind, ebenfalls mitbewegt, also nach vorne geschoben oder nach hinten gezogen. Da diese stab- oder rohrförmigen Verstellglieder gelenkig mit den Blattschäften verbunden sind, werden als Folge der Übertragung der axialen Verstellbewegung auf die gelenkig angefügten Verstellglieder somit auch die Blattschäfte bewegt. Das Resultat ist eine Relativverstellung der Blattanstellwinkel und zwar so, dass die Verstellung in gleichem Betrag und mit gleicher Richtung beziehungsweise Auslenkung auf alle Blätter wirken, welche je mittels eines Verstellgliedern mit der zentralen Strebe gelenkig verbunden sind.

Die genannte Funktionsweise aus dem Stand der Technik verwendet ebenfalls die Konstruktion eines Herstellers für KWEA zur Wassererzeugung (EOLEWATER [2011]).

Eine individuelle Blattverstellung in der Form, dass jedes Blatt durch ein separates Stellglied aktiv und unabhängig von der jeweiligen Verstellung der anderen vorhandenen Blätter verstellt wird, ist dadurch jedoch jeweils nicht möglich.

Auch in KWEA wäre eine individuelle Verstellung oder Einzelblattverstellung von Wesentlichem Vorteil im Sinne einer höheren Energieausbeute. Diese aktuellen Nachteile betrachtend resultiert das Problem, eine Vorrichtung oder ein System für Kleinwindenergieanlagen zu gestalten, welche es eine aktive individuelle Verstellung eines Blattes einer Kleinwindenergieanlage, insbesondere für Blätter von Windenergieanlagen mit einer Leistung von insgesamt weniger als 250 kW oder 200 kW, ermöglicht. Unter aktiver und individueller Verstellung wird verstanden, dass jedes Blatt durch eine separate Mechanik aktiv und unabhängig von der jeweiligen Verstellung der anderen vorhandenen Blätter verstellt werden kann. Diese erfindungsgemäßen Vorrichtung beziehungsweise die Baugruppe soll robust sein und sich als eine kompakte Einheit darstellen, welche flach aufbaut, also nicht viel Platz benötigt, und sich zwischen Nabe und Blatt(schaft) einkoppeln lässt.

In dem Aufsatz: "How Wind Power Works" von Julia Layton aus dem Jahr 2010, veröffentlicht im Internet unter der URL: http://science.howstuffworks.com/environmental/green-science/wind-power4.htm wird zwar ein umfassender Überblick über moderne Windkraftanlagen gegeben; Besonderheiten einer Einrichtung zur Veränderung des Blattanstellwinkels sind darin jedoch nicht enthalten.

Bei dem Dokument EP 1 959 129 A2 ist ein Blattlager offenbart mit einer Verzahnung an der Innenseite des inneren Rings, worin ein Antriebsritzel eines Pitchantriebs zur Verstellung des Rotorblattwinkels eingreifen kann. Einer der beiden Ringe wird mit der Rotornabe des Windrades verschraubt, der andere mit dem zu verstellenden Rotorblatt. An einem dieser Ringe ist ein Versteifungsring angeordnet. Es kann auch ein plattenförmiges Element geben. Es ist nicht erkennbar, dass der Verzahnungsbereich abgeschlossen ist. In jedem Falle würde ein abgeschlossener Bereich jedoch den gesamten Raum radial innerhalb des Innenrings umschließen, so dass es kaum möglich ist, ein Schmiermittel im Bereich der Verzahnung zu halten, insbesondere auch deshalb, weil ja das Blattlager infolge seiner Montage an der Rotornabe beständig um deren Hauptachse rotiert und seine Lage im Raum dabei unablässig ändert, so dass ein Schmiermittel in einem solch großen Hohlraum hilflos hin und her geworfen würde.

Ähnliches gilt für eine Anordnung, wie sie in der US 2011/0142618 A1 beschrieben ist. Auch dort ist ein Blattlager für eine Windkraftanlage offenbart, mit einer rundum laufenden Verzahnung an der Innenseite des Innenrings, womit ein Ritzel an einem Verstellantrieb kämmt. An den beiden Stirnseiten des Blattlagers ist je eine Platte verankert, und zwar, indem je eine Platte bei der Montage eines Lagerrings an der Rotornabe bzw. an dem Rotorblatt zwischen Lagerring und Nabe bzw. zwischen Lagerring und Blattwurzel eingefügt ist. Demnach ist eine der beiden Scheiben an der Nabe festgelegt, die andere an dem dieser gegenüber verstellbaren Blatt. Die beiden Scheiben werden also bei jeder Pitchwinkelveränderung gegeneinander verdreht. Auch hier ist demnach allenfalls der gesamten Raum radial innerhalb des Innenrings nach außen abgeschlossen, und außerdem ist die Berandung dieses Bereichs nicht in sich starr ausgebildet, sondern umfasst gegeneinander verdrehbare Scheiben. Da obendrein das Blattlager bei jeder Umdrehung des Windrades seine Lage im Raum ändert, wird das Schmiermittel eher in alle möglichen Nischen des riesigen Hohlraums hineinwandern, anstatt sich im Bereich des Eingriffs zwischen Ritzel und Verzahnung aufzuhalten.

Es stellt sich daher das Problem, wie die Schmiersituation innerhalb eines Blattlagers einer Kleinwindkraftanlage verbessert werden kann.

### Problemlösung und Erfindungsmerkmale:

Die Lösung des gestellten Problems gelingt dadurch, dass im Inneren der Baugruppe ein Mantel angebracht oder eingebracht ist, dessen Durchmesser kleiner ist als der Durchmesser des kleineren, innen liegenden Wälzlagerringes, und der an einer Gehäuse- oder Zwischenscheibe derart befestigt ist, dass seine Außenseite der Verzahnung oder dem Ritzel zugewendet ist.

Der Einsatz eines innen liegenden Mantels wird empfohlen, um das Schmiermittel in der Nähe der zu schmierenden Komponenten zu halten.

In der Regel ist einer der beiden Ringe der (Kugel-) Drehverbindung mit dem Blatt verbunden, während der andere der beiden Ringe mit der Nabe der Windenergieanlage verbunden ist.

Dabei sieht die Verbindung zwischen einem der beiden Ringe und der Konstruktion/Anschlusskonstruktion, beispielsweise dem Blatt, beziehungsweise dem Blattschaft, mindestens eine Zwischenscheibe oder andere Zwischenelemente vor. Diese mindestens eine Zwischenscheibe bildet eine Art Gehäuse für die daran befestigte (Kugel-) Drehverbindung aus, sodass die erfindungsgemäße Baugruppe im Prinzip bereits montagefertig als kompakte Einheit angeliefert werden kann.

Durch den Einsatz einer erfindungsgemäßen Vorrichtung werden die vorgenannten Probleme gelöst und die Nachteile der aktuell bekannten Systeme vermieden.

Merkmale und Ausprägungen sind in der folgenden Beschreibung und in den Patentansprüchen beschrieben. Eine beispielhafte Ausführungsform ist der Zeichnung zu entnehmen.

Ein grundsätzliches Merkmal der Erfindung ist, dass sie als kompakte und autarke Einheit ausgeführt werden kann, welche nicht mit den Verstellmechanismen der jeweils anderen Blätter kraftwirkgemäß verbunden ist. Es ist demnach exakt je eine erfindungsgemäße Vorrichtung oder ein solches System für exakt je ein zu verstellendes Blatt vorhanden.

Diese erfindungsgemäße Vorrichtung oder das erfindungsgemäße System, nachstehend als Baugruppe bezeichnet, ist direkt in der Nähe des zu verstellenden Blattes angeordnet, ohne dass die Baugruppe viel zusätzlichen Platz benötigt. Es werden nach außen hin auskragende Elemente dieser erfindungsgemäßen Vorrichtung oder des System beziehungsweise der Baugruppe vermieden, welche die Anströmcharakteristik der KWEA durch den Wind negativ beeinflussen könnten.

Diese erfindungsgemäße Vorrichtung beziehungsweise die Baugruppe ist robust und als kompakte Einheit ausgeführt, insbesondere als eine flache, zylinderförmige, und im Wesentlichen gehäuseummantelte Baugruppe. Durch diese Kompaktheit kann die Baugruppe leichter montiert und transportiert werden, als herkömmliche Blattverstellsysteme für KWEA.

Der innenliegende Mantel kann aus einer verstärkten Stahl- oder Kunststoffwandung bestehen, die halbmondförmig- oder dreiviertelmondförmig ausgeführt ist. Die Innenseite dieser Wandung ist in der Regel nicht mit Schmiermittel- oder Öl in Verbindung, während die Außenseite dieser Wandung der Verzahnung beziehungsweise dem Ritzel zugewendet ist. Dieser Mantel verfügt über einen Durchmesser, der geringer ist als der Durchmesser des inneren Ringes, im Falle einer innenverzahnten Baugruppe insbesondere geringer ist als der Durchmesser der Innenverzahnung. Der Mantel kann mittels herkömmlichen Schrauben an einer der genannten Zwischenscheibe befestigt werden. Dadurch wird der Mantel in Position gehalten.

Die Verstellung eines (jeden) Blattes einer Kleinwindenergieanlage ist demnach möglich durch ein Aggregat, ausgeführt als hydraulischer oder elektrischer Antrieb mit Getriebestufe, welcher von der Innenseite der Windanlagennabe an eine Baugruppe fest verbunden, beispielsweise angeflanscht, geschraubt oder angenietet oder an diese Baugruppe angeschweißt wird. Für Servicezwecke ist dieses später innen liegende Aggregat von außen zwar unter Umständen zugänglich, aber beispielsweise jedoch nur durch vorherige Maßnahmen, etwa durch das Freilegen einer vorhandenen Serviceklappe oder durch das Aufschieben beziehungsweise Aufklappen einer Öffnung in der Nabe, idealerweise jeweils in der unmittelbaren Umgebung des jeweiligen Aggregates.

Die erfindungsgemäße Baugruppe selbst beinhaltet zwei gegeneinander verdrehbare Wälzlagerringe in Form einer Drehverbindung, insbesondere einer (Kugel-) Drehverbindung. Diese Baugruppe ist erfindungsgemäß als neues, zusätzliches Zwischenelement zwischen dem jeweiligen Blatt, insbesondere dem zugehörigen Blattschaft, der KWEA und der Nabe der KWEA anzubringen beziehungsweise anbringbar/ankoppelbar. Diese Baugruppe weist eine wesentlich kleinere Gesamtbauhöhe auf als sein Gesamtdurchmesser beträgt.

Der äußerste Durchmesser der erfindungsgemäßen Baugruppe ist dabei prinzipiell ähnlich groß wie der Durchmesser des durch die Baugruppe zu verstellenden Blattes oder Blattschaftes, sodass sich die Baugruppe sehr gefällig zwischen den Blattschaft und die Anschlusskonstruktion einfügt, ohne dass Absätze oder Stufen gebildet werden. Der äußerste Durchmesser der Baugruppe ist in etwa der des Blattschaftes.

In der Regel beträgt die äußerste Bauhöhe der Erfindung höchstens ein Viertel des äußersten Durchmessers. Noch besser wäre eine noch geringeres Höhe-zu-Durchmesser-Verhältnis, etwa wenn die Bauhöhe der erfindungsgemäßen Baugruppe demnach bis zu einem Fünftel seines Durchmessers beträgt und somit höchstens ein Fünftel des Blattschaftes. Der Antriebsstrang beziehungsweise das Aggregat und ggf. angeschlossene Einheiten sind nicht Teil der erfindungsgemäßen Baugruppe. Die oben genannten Dimensionen bezüglich des Höhe-zu-Durchmesser-Verhältnis beziehen daher Antriebsstrang beziehungsweise das Aggregat ausdrücklich nicht mit ein.

Gemäß der Lehre der Erfindung ist einer der beiden Ringe dieser Drehverbindung entlang seines Umfanges verzahnt, damit die Kraft von einem Element auf das zu verstellende Element übertragen werden kann. Hierbei kann es sich um den Innenumfang des kleineren, innen liegenden, Wälzlagerringes handeln - man spricht dann von einer Innenverzahnung des inneren Ringes - oder aber um den Außenumfang des größeren, außen liegenden, Wälzlagerringes - man spricht dann von einer Außenverzahnung des äußeren Ringes.

Die Drehverbindung kann als eine aus dem Stand der Technik bekannte (Kugel-) Drehverbindung ausgeführt sein, insbesondere als aus dem Stand der Technik bekanntes Vierpunktlager ausgeführt sein.

In einer weiteren Ausgestaltung der Erfindung sind auch jegliche anderen kompakten Lagerbauformen, wie etwa ein kompaktes Zylinderrollenlager, ein kompaktes Kegelrollenlager, ein kombiniertes Kugel- und Rollenlager, oder entsprechende Kombinationen hiervon, möglich und denkbar. Insbesondere sind in weiteren Ausgestaltungen der Erfindung auch mehrreihig ausgeführte Drehverbindungen, demnach also mehrreihige Kugellager, mehrreihige Kegelrollenlager, mehrreihige Zylinderrollenlager, oder mehrreihige kombiniertes Kugel- und Rollenlager, oder entsprechende Kombinationen hiervon, welche Kugeln und Zylinder/Rollen als Wälzkörper verwenden, sinnvoll möglich und denkbar. Die Größe und Ausgestaltung der Drehvervbindung hängt prinzipiell von den zu übertragenden Momenten und Lasten ab. Im weiteren Verlauf der Beschreibung wird jedoch schwerpunktmäßig auf die bevorzugte Ausführungsform mit (Kugel-) Drehverbindung eingegangen.

Die genannte Verzahnung erstreckt sich jeweils mindestens über eines der vier Kreissegmente des verzahnten Umfanges, vorzugsweise jedoch über alle vier Kreissegmente des verzahnten Umfanges.

Ebenfalls ist es nach der Lehre der Erfindung vorgesehen, dass die form- und kraftschlüssige Verbindung zwischen dem Aggregat und der genannten Erfindungs-Baugruppe über ein Ritzel erfolgt. Dieses Ritzel greift direkt in die genannte Verzahnung ein und treibt diese an. Die Antriebsleistung rührt von dem bei Bedarf angesteuerten Aggregat, welches die Antriebsleistung über die Getriebestufe auf das Ritzel überträgt, welches sich - je nach Polarität Ansteuerung - mit oder entgegen dem Uhrzeigersinn dreht, solange die Ansteuerung andauert. Das Ritzel überträgt jede Drehbewegung entsprechend auf die Verzahnung und somit auf den verzahnten Ring der (Kugel-) Drehverbindung und verdreht auf diese Weise die beiden Wälzlagerringe gegeneinander. Diese Verdrehbewegung hört in der Regel dann auf, wenn auch die Ansteuerung aufhört. (In Spezialformen der Ansteuerungssystematik können jedoch Totzeitglieder oder Verzögerungsglieder vorhanden sein.)

Es ist im Sinne der Lehre der Erfindung zu betonen, dass jeweils einer der beiden Ringe der (Kugel-) Drehverbindung fest mit der benachbarten Konstruktion/Anschlusskonstruktion verbunden ist. Dies wird in der Regel über jeweils mehrere Schraubverbindungen realisiert, welche in einen konzentrischen "Schraubenkreis" resultieren. Mindestens notwendig zur Realisierung dieses Schraubenkreises sind vier konzentrisch angebrachte Schrauben. Die jeweils benachbarten Schrauben haben jeweils gleichen Abstand zueinander.

Erfindungsgemäß ist es jedoch unbedingt einzuhalten, dass durch eine oder mehrere Zwischenscheibe oder andere Zwischenelemente die konstruktive Verbindung zwischen dem oben genannten Aggregat und der Baugruppe keinesfalls unterbrochen werden darf. Der Eingriff des Ritzels in die Verzahnung der Baugruppe wird also unter allen Umständen stets gewahrt. Zum Verständnis des Gehäuses ist zu betonen, dass an beiden Seiten der (Kugel-) Drehverbindung mindestens eine Zwischenscheibe oder andere Zwischenelemente befestigt werden können.

Höchstens beträgt die Bauhöhe der erfindungsgemäßen Baugruppe inklusive der gegebenenfalls vorhandenen Zwischenscheiben, dies sei nochmals betont, ein Viertel seines eigenen äußeren Durchmessers und ist somit flach und kompakt gehalten.

In einer vorzugsweisen Ausführungsform der Erfindung ist der Innenring der Drehverbindung mit dem Blatt(schaft) fixiert, während der Außenring der Drehverbindung an der Nabe der Kleinwindenergieanlage fixiert ist. Die Drehverbindung ist als einreihige Kugeldrehverbindung ausgeführt. Die Laufbahnen können gehärtet oder hartgedreht sein. Die Schmiegung des Vierpunktlagers kann beispielsweise um etwa 94% betragen, aber auch geringfügig mehr oder weniger.

Im Sinne der Erfindung werden Dichtungsanordnungen eingesetzt, um vor Allem die (Kugel-) Drehverbindung gegen äußerliches Eindringen von Fremdkörpern und Staub oder Schmutz und andere äußere Einflüsse zu schützen, und um das Auslaufen des Schmiermittels der (Kugel-) Drehverbindung, zu verhindern. Schmiermittel in diesem Sinne können Schmierfette sein oder andere zähflüssige Schmiermedien, aber auch solches Öl, welches durch die Dichtungsanordnungen im Inneren der Drehverbindung gehalten werden kann. Erfindungsgemäß ist mindestens eine umlaufende Dichtungsanordnung pro Seite vorgesehen, um den Spalt zwischen den beiden Wälzlagerringen abzudichten. Es ist jedoch denkbar, im Sinne einer besseren Dichtwirkung mehrere umlaufende Dichtungsanordnungen pro Seite zu verwenden, gegebenenfalls auch haltungsverstärkte Dichtungsvorrichtungen, etwa Dichtungsvorrichtungen mit eingelegten Stahl- oder Zugbändern zur Erhöhung des Anpressdruckes der Dichtung an die abzudichtende Anordnung. Herkömmliche Dichtungsmaterialen können kautschukartige Materialien sein, wie beispielsweise auch Viton, NBR, ECO. Die Anlaufflächen der Dichtung können gehärtet oder hartgedreht sein.

Bei der Verzahnung kann man erwähnen das diese wärmebehandelt (vergütet, gehärtet) ausgeführt sein kann, im vorzugsweisen Fall zahnflankengehärtet ausgeführt ist.

Rückblickend auf das Aggregat ist zu betonen, dass erfindungsgemäß auch jenes Aggregat an eine Zwischenscheibe befestigt werden kann. Dann ist jedoch eine Öffnung nötig, sodass das in die Verzahnung eingreifende Ritzel weiterhin mit dem Getriebe des Aggregates verbunden bleiben kann, wie weiter oben betont wird.

Die beiden Wälzlagerringe können beispielsweise, müssen aber nicht zwangsweise, über integrierte Schmierbohrungen verfügen. Ebenso sind in der Regel Schmiernippel vorhanden. Ein eventuell vorhandener Härteschlupf liegt für gewöhnlich im Bereich des Einlasstopfens für Wälzkörper.

Es ist im Sinne der Erfindung zu betonen, dass die Wälzkörper der (Kugel)drehverbindung auch käfiggeführt sein können, aber nicht käfiggeführt sein müssen. Auch die Verwendung von Distanzstücken zwischen den Wälzkörpern ist in einer weiteren Ausgestaltungsform vorgesehen. Beispielsweise können auch Distanzstücke mit magnetisierten Zwischenkörpern verwendet werden.

Besonders vorteilhaft in Bezug auf Witterungswiderstand und Langzeitbeständigkeit der Vorrichtung kann es sein, wenn die Ringe der (Kugel)drehverbindung beschichtet sind, beispielsweise etwa oxidiert oder Eisen-Zink-beschichtet. Einer oder beide Ringe können chromatiert sein. In einer vorteilhaften Ausgestaltung der Erfindung ist der Innenring oxidiert mit einer Oxidschichtdicke von unter 7 µm. In einer vorteilhaften Ausgestaltung der Erfindung ist der Außenring Eisen-Zink-beschichtet, etwa mit einer Schichtdicke von über 7 µm. Die Wälzlagerringe der Drehverbindung können aus herkömmlichen Lagerstählen, beispielsweise etwa 42CrMo4, gefertigt sein.

In der vorteilhaftesten Ausgestaltung verfügt die Baugruppe, ausgelegt für KWEA mit mittlerer Leistungsklasse um etwa 30 kW bis 70 kW, welcher die (Kugel-) Drehverbindung beinhaltet, über die folgenden Maßgrößen:
- Durchmesser des Innenringes im Bereich der Befestigungsbohrungen etwa um 40 cm;
- Durchmesser des Außenringes im Bereich der Befestigungsbohrungen etwa um 52 cm;
- Äußerster Durchmesser D der Baugruppe etwa um 55 cm;
- Durchmesser der Innenverzahnung etwa um 35 cm;
- Höhe der Wälzkörperringe etwa um 8 cm;
- Höhe der Verzahnung etwa um 5 cm;
- Gesamthöhe H um 10 cm.

Sehr gut einsetzbar sind auch Baugruppen für KWEA in einer höheren Leistungsklasse um etwa 100 bis 250 kW, mit beispielsweise den folgenden Maßgrößen:
- Äußerster Durchmesser D der Baugruppe etwa um bis zu 100 cm;
- Durchmesser der Innenverzahnung etwa um bis zu 85 cm;
- Höhe der Wälzkörperringe etwa um bis zu 15 cm;
- Höhe der Verzahnung etwa um bis zu 11 cm;
- Gesamthöhe H um bis zu 20 cm.

Ebenfalls sehr gut einsetzbar sind auch Baugruppen für KWEA in geringeren Leistungsklassen mit dementsprechend geringeren Maßgrößen.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Diese Figuren werden im Folgenden beschrieben. Dabei zeigen:
- Fig. 1a, 1b: eine erfindungsgemäße Gesamtanlage als Kleinwindenergieanlage (KWEA) (50) mit einer Leistung von insgesamt weniger als 250 bis 200 kW in einer schematischen Darstellung;
- Fig. 1c: die Vorderansicht der Nabe der KWEA;
- Fig. 2: die perspektivische Darstellung eines erfindungsgemäßen Aggregats;
- Fig. 3: eine, erfindungsgemäße, im Wesentlichen von einem Gehäuse umschlossene Baugruppe;
- Fig. 4a: die erfindungsgemäße Baugruppe, vertikal geschnitten;
- Fig. 4b: die Verstellmechanik, horizontal geschnitten;
- Fig. 4c: die erfindungsgemäße Baugruppe, vertikal geschnitten und vergrößert.

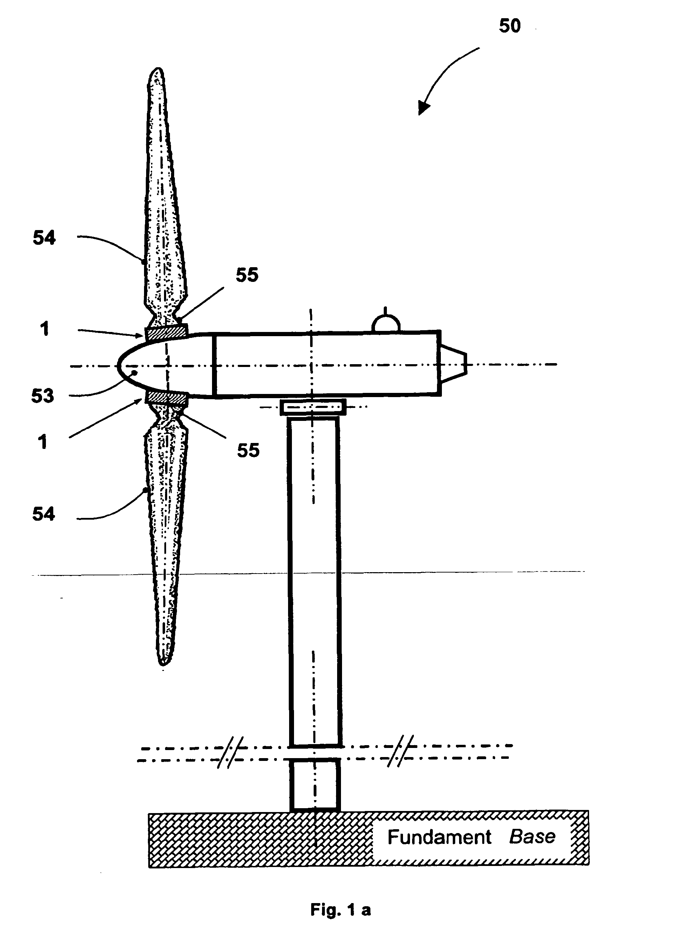

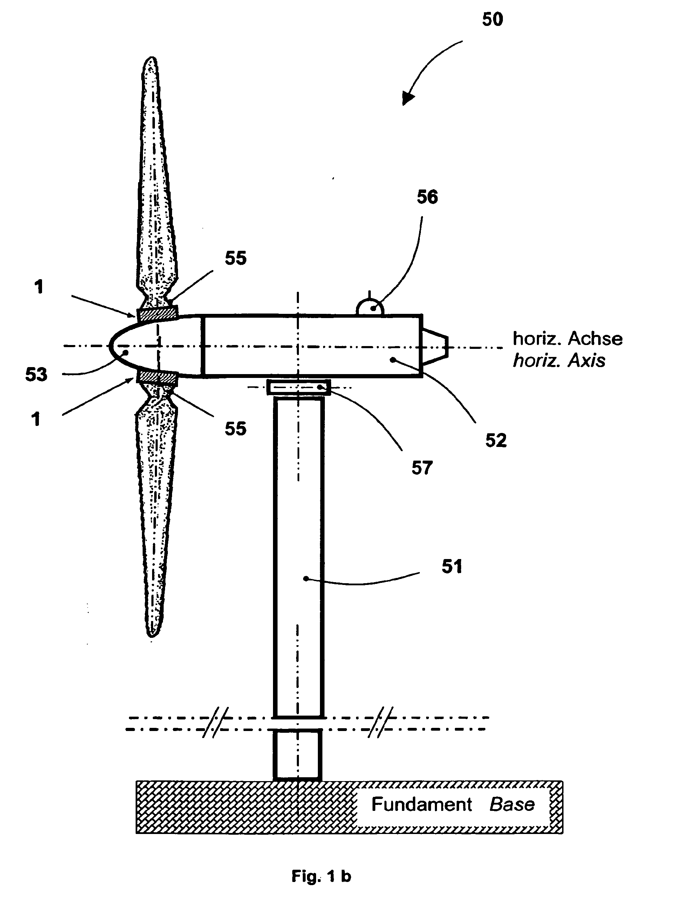

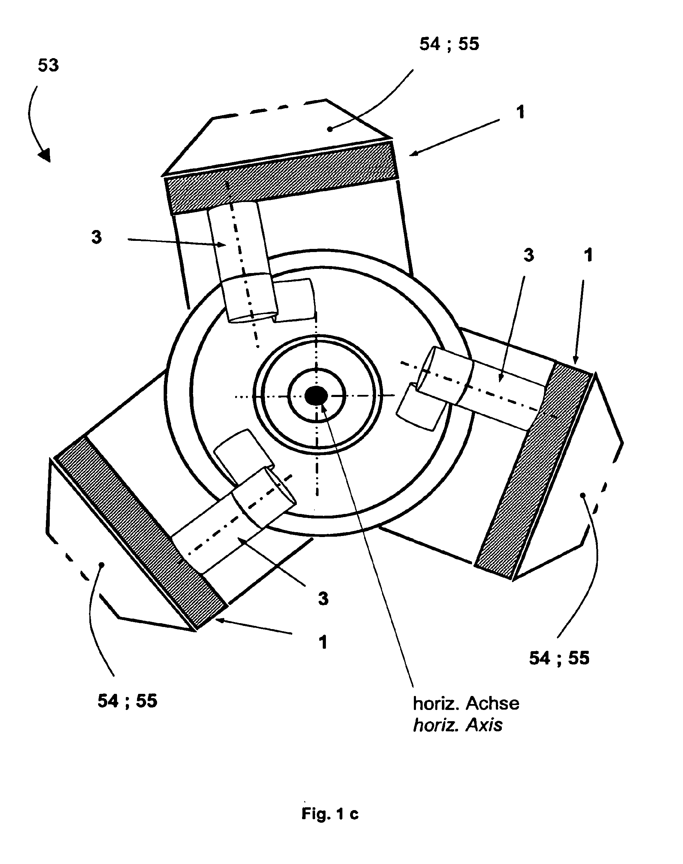

Fig.1 a, als auch Fig. 1 b zeigen beispielhaft schematisch die erfindungsgemäße Gesamtanlage als Kleinwindenergieanlage (KWEA) 50 mit einer Leistung von insgesamt weniger als 250 kW, im Besonderen sogar weniger als 200 kW. Die KWEA 50 ist nach dem modernen Standard-Design mit mehreren Blättern 54 ausgeführt, welche jeweils indirekt mit der Nabe 53 verbunden sind, und zwar mittels je einer Baugruppe 1, die die aktive Verstellung des jeweiligen Blattes 54 beziehungsweise Blattschaftes 55 ermöglicht. Dieses moderne Standard-Design bildet eine und horizontale Achse der KWEA ab, sowie einen Mast 51 oder Aufständerungsstruktur 51 beziehungsweiseTurm 51, der beispielsweise auf einem Fundament gegründet ist, (prinzipiell aber auch in oder an einem anderen Gebäude- oder Gebäudeteil befestigt sein könnte). Zumeist ist die entsprechende Wind-Sensorik 56 vorhanden, um zu erkennen in welche Richtung die Anlage 50 in der horizontalen Ebene geschwenkt werden muss, um maximale Ausbeute gewinnen zu können. Diese azimutale Schwenkbewegung wird durch einen entsprechenden, zwischen Mast 51 und Gondel 52 oder Maschinenträger 52 Aktor realisiert. Dieser Aktor 57 kann als Schwenkantrieb ausgeführt sein, beispielsweise als ein Schwenkantrieb, welcher in seinem Inneren zwei gegeneinander verdrehbare Lagerringe besitzt, deren Verdrehung durch einen weiteren Antrieb, den Turm- oder Azimutantrieb 57 erwirkt werden kann.

Fig. 1 c zeigt beispielhaft schematisch die erfindungsgemäße Vorderansicht der Nabe der KWEA 50, wobei die Nabe geschnitten dargestellt ist. Die Baugruppe 1, die im Wesentlichen gehäuseumschlossen ist, ist dabei jeweils zwischen Blatt 54 beziehungsweise Blattschaft 55 positioniert, und besitzt im Wesentlichen den Durchmesser, den auch die jeweilige Anschlusskonstruktion 53 beziehungsweise Blatt 54 oder Blattschaft 55 besitzt mit dem Ziel, dass sich die Baugruppe möglichst formidentisch in die Anlage 50 einfügen lässt. Diese Maßnahme vermindert "Stufenbildung" und optimiert auch die Windanströmverhältnisse sowie die optische Wirkung. Dabei ist zu betonen, dass die jeweiligen Aggregate 3 beziehungsweise der jeweilige Antriebsstrang, welcher an die Baugruppe 1 ankoppelbar oder anschließbar ist, nicht vom Gehäuse der Baugruppe 1 umfasst wird, sondern im Inneren der Nabe 53 beziehungsweise im Inneren der Struktur der Anschlusskonstruktion 53 positioniert ist, ohne jeweils sehr viel Volumen einzunehmen.

In der beispielhaften Ausführung nach Fig. 1c ist eine dreiblättrige KWEA gezeigt, mit horizontaler Achse. Das Aggregat 3 ist dabei jeweils stets prinzipiell mit dem Ritzel 4 in Richtung der Baugruppe 1 positioniert, da das Ritzel in die Verzahnung 5 der Baugruppe eingreift, wenn die Verstellbewegung des Blattes 54 gefordert ist.

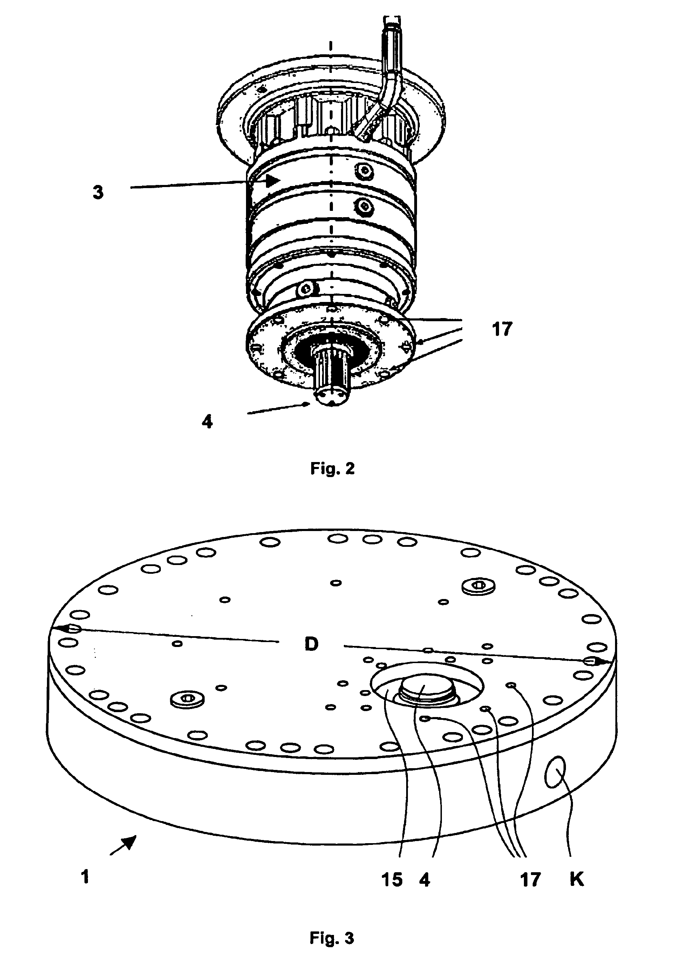

Die Fig. 2 zeigt beispielhaft schematisch die perspektivische Darstellung eines solchen beispielhaften Aggregats 3, aus dem das Ritzel 4 herausragt.

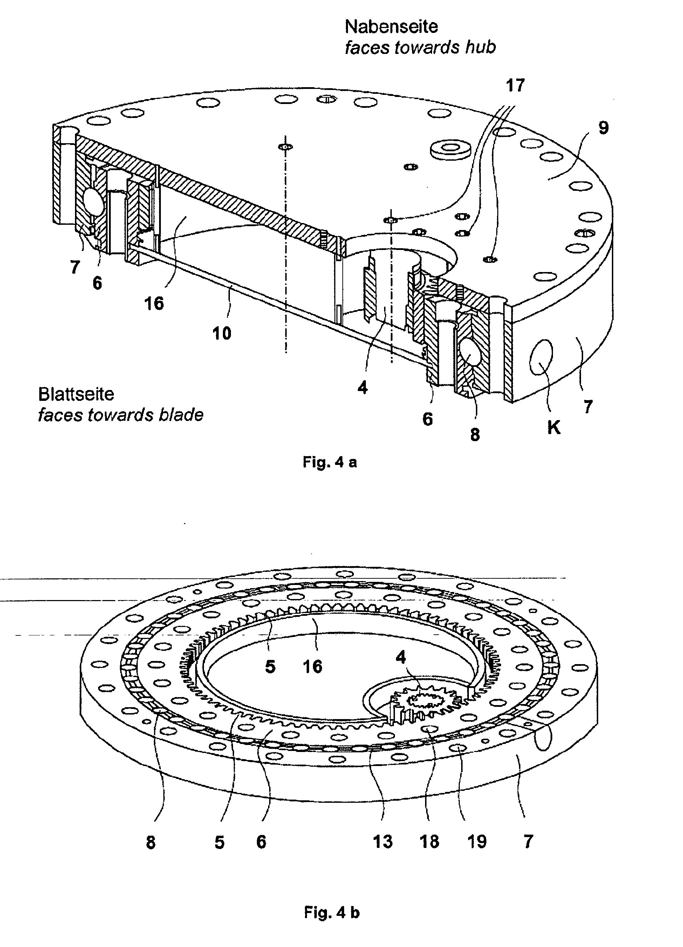

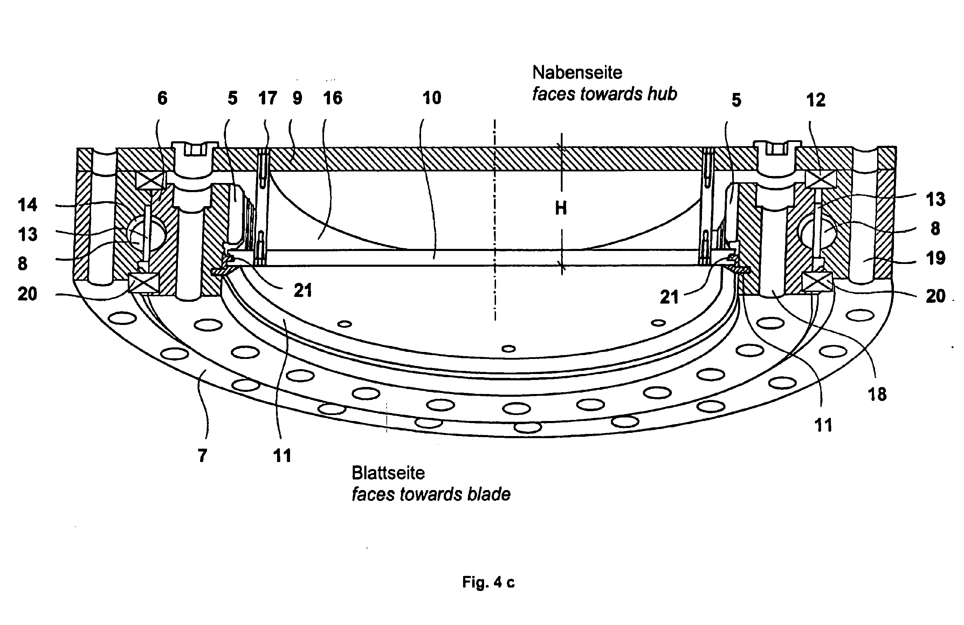

Fig. 3 sowie Fig. 4a sowie Fig. 4b sowie Fig. 4c zeigen beispielhaft und schematisch die erfindungsgemäße perspektivische Darstellung der im Wesentlichen gehäuseumschlossenen Baugruppe 1. In der erstgenannten Darstellung ist das Gehäuse von außen ersichtlich, angedeutet jeweils sind die Nabenseite 53 und die Blattseite (54), um die Positionierung der Baugruppe 1 zu erklären. Das Aggregat 3 inklusive dem Ritzel 4 wird im eingebauten Zustand entweder mittels Schrauben in entsprechenden Bohrungen 17 mit der Baugruppe 1 beziehungsweise an der Zwischen- oder Gehäusescheibe 9 befestigt. Beispielsweise kann das Ritzel 4 durch eine Öffnung 15 an die Verzahnung 5 angepasst oder angelegt werden, um dort den für eine Verdrehung des Wälzkörperringes nötigen Schluss zu erhalten.

Fig. 4a sowie Fig. 4b sowie Fig. 4c zeigen jeweils Schnittdarstellungen der Baugruppe, jeweils ohne Aggregat wie in Fig. 3. Dabei sind gezeigt, dass eventuelle nach außen hin auskragende Elemente vermieden werden, da alle wesentlichen Teile der Verstellmechanik der Vorrichtung oder Baugruppe 2 im Inneren dieser Baugruppe 1 angeordnet sind.

Die Baugruppe 1 ist als kompakte Einheit ausgeführt, die mit dem Aggregat 3 verbunden werden kann, wobei das Aggregat 3 von der Innenseite (Nabenseite) der Windanlagennabe an die Baugruppe 1 fest verbunden, beispielsweise angeflanscht, geschraubt oder angenietet oder an diese Baugruppe angeschweißt werden kann. Für Servicezwecke können Serviceklappen jeweils in der unmittelbaren Umgebung des jeweiligen Aggregates 3 installiert werden. Diese Servicemittel werden in der Nabe beziehungsweise der Anschlusskonstruktion 53 zu finden sein. Der äußerste Durchmesser D der erfindungsgemäßen Baugruppe 1 ist dabei prinzipiell ähnlich groß wie der Durchmesser des durch die Baugruppe zu verstellenden Blattes 54 oder Blattschaftes 55. Das Verhältnis H/D beträgt im vorliegenden Beispiel weniger als ein Fünftel.

Fig. 4a sowie Fig. 4b sowie Fig. 4c zeigen je ebenso die gegeneinander verdrehbaren Wälzlagerringe 6, 7 in Form einer Drehverbindung, vorzugsweise einer Kugeldrehverbindung, hier als Vierpunktlager ausgeführt.

Die genannte Verzahnung 5 ist in den Innenring 6 eingebracht und erstreckt sich über alle vier Kreissegmente des verzahnten Umfanges. Das Ritzel 4 greift direkt in die genannte Verzahnung ein und treibt diese an, sobald das Ritzel angetrieben wird. Es ist möglich - je nach Ansteuerung - die Verzahnung in oder gegen den Uhrzeigersinn anzutreiben, und somit den Innenring 6 entweder in die eine - oder die andere Richtung gegenüber dem Außenring 7 zu verdrehen.

Jeweils einer der beiden Ringe 6, 7 ist mit der benachbarten Konstruktion, also entweder mit dem Blatt 54 beziehungsweise dem Blattschaft 54 - oder aber mit der Anschlusskonstruktion beziehungsweise der Nabe 53 verbunden. Dies wird in der Regel über jeweils mehrere Schraubverbindungen realisiert, welche in einem konzentrischen "Schraubenkreis" oder "Schraubenring" 18, 19 resultieren. Mindestens notwendig zur Realisierung dieses Schraubenkreises sind vier konzentrisch angebrachte Schrauben, gleichmäßig über den Schraubenring verteilt. Im vorliegenden Beispiel ist der Außenring 7 mit der Nabe 53 oder der Anschlusskonstruktion 53 mittels Verschraubung des Schraubenkreises 19 verbunden, hier sogar mit der Zwischenscheibe 9 als zwischengeschaltetes Element. Im vorliegenden Beispiel ist der Innenring 6 mit dem Blatt 54 beziehungsweise mit dem Blattschaft 55 mittels Verschraubung des Schraubenkreises 18.

Die Verwendung von einer oder mehreren Zwischenscheiben 9, 10 ist nicht obligatorisch für die Verstellfunktion der Erfindung 1. Es ließe sich nämlich die Verbindung zwischen einem der beiden Ringe 6, 7 und der Konstruktion/Anschlusskonstruktion oder dem Blatt, beispielsweise jeweils durch Schraubung, herstellen, ohne dass die Zwischenscheibe 9 vorhanden ist. Dabei ist es jedoch unbedingt einzuhalten, dass durch eine oder mehrere vorhandene Zwischenscheiben 9, 10 die konstruktive Verbindung zwischen dem oben genannten Aggregat und der Baugruppe keinesfalls unterbrochen werden darf. Der Eingriff des Ritzels 4 in die Verzahnung 5 der Baugruppe 1 wird also unter allen Umständen stets gewahrt.

Die Laufbahnen können gehärtet oder hart gedreht sein.

Die Schmiegung des Vierpunktlagers kann beispielsweise um etwa 94% betragen.

Im Sinne der Erfindung werden Dichtungsanordnungen 11, 12, 20, 21 eingesetzt, um vor Allem die Kugeldrehverbindung gegen äußerliches Eindringen von Fremdkörpern und Staub oder Schmutz und andere äußere Einflüsse zu schützen.

Die Verzahnung 5 kann wärmebehandelt sein (vergütet, gehärtet) und ist im vorgestellten Beispiel auch zahnflankengehärtet.

Um das Schmiermittel in der Nähe der zu schmierenden Komponenten zu behalten, ist ein innenliegender Mantel 16 vorgesehen, welcher aus einer verstärkten Stahl- oder Kunststoffwandung besteht, die halbmondförmig- oder dreiviertelmondförmig ausgeführt ist. Der Mantel kann mittels herkömmlichen Schrauben 17 an einer der genannten Zwischenscheibe 9 befestigt werden. Dadurch wird der Mantel in Position gehalten.

Die beiden Wälzlagerringe können beispielsweise, müssen aber nicht zwangsweise, über integrierte Schmierbohrungen verfügen. Ebenso sind in der Regel Schmiernippel vorhanden.

Ein eventuell vorhandener Härteschlupf liegt für gewöhnlich im Bereich des Einlasstopfens K für Wälzkörper.

Es ist im Sinne der Erfindung zu betonen, dass die Wälzkörper der Kugeldrehverbindung auch käfiggeführt sein können, aber nicht käfiggeführt sein müssen. Auch die Verwendung von Distanzstücken 13 zwischen den Wälzkörpern 8 ist in dem Beispiel dargestellt. Beispielsweise können auch Distanzstücke 13 oder Käfigteile 13 mit magnetisierten Zwischenkörpern verwendet werden.

Im vorliegenden Beispiel sind die Ringe der Kugeldrehverbindung beschichtet, etwa oxidiert oder Eisen-Zink-beschichtet. Der Innenring ist mit einer Oxidschicht beaufschlagt. Der Außenring ist Eisen-Zink-beschichtet, die Wälzlagerringe der Drehverbindung sind aus 42CrMo4, gefertigt.

### Bezugszeichenliste:

- 1: Erfindungsgemäße Vorrichtung oder Baugruppe
- 2: Verstellmechanik der Vorrichtung oder Baugruppe
- 3: Aggregat, ggf. mit Getriebestufe
- 4: Ritzel
- 5: Verzahnung
- 6: Erster, innerer, Wälzlagerring
- 7: Zweiter, äußerer, Wälzlagerring
- 8: Wälzkörper
- 9: Zwischenscheibe; auch als Gehäusescheibe
- 10: Zwischenscheibe; auch als Gehäusescheibe
- 11: Umlaufende Dichtungsanordnung
- 12: Umlaufende Dichtungsanordnung zur Abdichtung der Drehverbindung
- 13: Wälzlagerkäfig oder Distanzstücke
- 14: Wälzkörperlaufbahn
- 15: Öffnung
- 16: Mantel
- 17: Befestigungsbohrungen zur Verbindung von Aggregat und Baugruppe
- 18: Bohrungen für Befestigungsschrauben an erstem Wälzlagerring
- 19: Bohrungen für Befestigungsschrauben an zweitem Wälzlagerring
- 20: Umlaufende Dichtungsanordnung zur Abdichtung der Drehverbindung
- 21: Umlaufende Dichtungsvorrichtung
- 50: Kleinwindenergieanlage (KWEA)
- 51: Mast oder Aufständerungsstruktur
- 52: Gondel oder einen Maschinenträger mit Generator
- 53: Nabe
- 54: Blatt
- 55: Blattschaft
- 56: Sensorik/Instrumente zur Wind-/Strömungsbestimmung
- 57: Aktor zur Nachstellung/Drehung der Anlage (in Azimut)
- D: Äußerster Durchmesser
- H: Äußerste Bauhöhe
- K: Einlass-Stopfen für Wälzkörper

### Zitierte Nichtpatentliteratur:

Hafner, Moutzouris [--]: Windkraft Standortanalyse, Projektarbeit M7. Fachochschule Augsburg, Fachbereich Maschinenbau, University of Applied Sciences; URL: http://www.hs-augsburg.de/medium/download/itw/windkraft_standortanalsye.pdf, abgerufen: 01.09.2011
Hughes, Leovac, Mayr, et.al [2008]: Projektgruppe Kleinwindkraftwerk, Kleinkraftwerke - Projekt im Schwerpunkt. Hochschule Augsburg, University of Applied Sciences; URL: http://www.hs-augsburg.de/medium/download/itw/Windkraft_Projektbericht_08_09_netz.pdf, abgerufen: 01.09.2011
Bundesverband Kleinwindanlagen [2010]: Definition von Kleinwindanlagen; URL: http://www.bundesverbandkleinwindanlagen.de/index.php?menuid=15 abgerufen: 01.09.2011
Schwieger, Hahn, BVKW [2011]: Vom Winde bewegt, Interview von Catrin Hahn; URL: http://joule.agrarheute.com/kleinwindenergieanlagen, abgerufen: 01.09.2011
CFGREENENERGY, C50 [2011]: CF50 Single Phase / Three Phase; URL: http://www.cfgreenenergy.com/turbines/cf50-single-phase-three-phase, abgerufen: 01.09.2011
CFGREENENERGY, TECHINFO [2011]: Wind Energy Technical Information; URL: http://www.cfgreenenergy.com/wind-energy-technical-information, abgerufen: 01.09.2011
EOLEWATER [2011]: URL: http://www.eotewater.com/gb/our-products/our-documentation.htmt URL: http://www.eolewater.com. abgerufen: 01.09.2011
ETAPLAN, Hau [2003]: Dipl.-Ing. Erich Hau (ed). (2003). Windkraftanlagen: Grundlagen, Technik, Einsatz, Wirtschaftlichkeit, (VDI-Buch), 3. Auflage. Berlin, Heidelberg: Springer-Verlag Berlin Heidelberg
Adelhardt [2011]: Martin Adelhardt, Leiter Kommunikation Schaeffler Gruppe Industrie 2010-05-27 ¦ 000-002-374 DE-DE, Drehverbindungen für exakte Positionierung Schaeffler Technologies GmbH & Co. KG, Schweinfurt; URL: http://www.ina.de/content.ina.de/de/press/press-releases/press-details.jsp?id=3391360, abgerufen: 02.09.2011
Simon, Riederer, Meurer [2010]: Wirtschaftliche Bewertung von Kleinwindanlagen mit Hilfe von Fallbeispielen. Institut für Innovation, Transfer und Beratung GmbH am 03.08.2010 für: SGD Süd, Zentralstelle der Forstverwaltung, Forschungsanstalt für Waldökologie und Forstwirtschaft Rheinland-Pfalz, Projektnummer 1649; URL: http://www.wald-rlp.de/fileadmin/website/fawfseiten/projekte/downloads/Kleinwindanlagen. pdf, abgerufen: 15.09.2011

## Patentansprüche

1. Baugruppe (1) zum aktiven Verstellen je eines Blattes (54) einer Kleinwindenergieanlage (50) gegenüber deren Nabe (53), umfassend
- eine Drehverbindung mit zwei gegeneinander verdrehbaren Wälzlagerringen (6,7), welche auf Wälzkörpern (8) abrollen, wobei einer der Wälzlagerringe (6,7) mit einem Blatt (54), der andere mit der Nabe (53) der Kleinwindenergieanlage (50) verbunden ist,
- ein Gehäuse, gegebenenfalls mit Öffnungen, welches mindestens zwei die Baugruppe versteifende Gehäuse- oder Zwischenscheiben (9,10) umfasst,
- sowie eine im Inneren des Gehäuses aufgenommene Verstellmechanik in Form einer Verzahnung (5) an dem Innenumfang des kleineren, innen liegenden Wälzlagerringes (6) sowie eines zu dessen Antrieb darin eingreifenden Ritzels (4), wobei sich die Verstellmechanik zwischen einer oberen Gehäuse- oder Zwischenscheibe (9) und einer unteren Gehäuse- oder Zwischenscheibe (10) befindet,
**dadurch gekennzeichnet, dass**
- im Inneren der Baugruppe (1) ein Mantel (16) angebracht oder eingebracht ist, dessen Durchmesser kleiner ist als der Durchmesser des kleineren, innen liegenden Wälzlagerringes (6), und der an einer Gehäuse- oder Zwischenscheibe (9,10) derart befestigt ist, dass seine Außenseite der Verzahnung (5) oder dem Ritzel (4) zugewendet ist.

2. Baugruppe (1) nach Anspruch 1, **dadurch gekennzeichnet, dass** der Mantel (16) aus einer verstärkten Stahl- oder Kunststoffwandung besteht.

3. Baugruppe (1) nach einem der Ansprüche 1 oder 2, **dadurch gekennzeichnet, dass** der Mantel (16) halbmondförmig oder dreiviertelmondförmig ausgeführt ist.

4. Baugruppe (1) nach einem der Ansprüche 1 bis 3, **dadurch gekennzeichnet, dass** die Innenseite des Mantels (16) in der Regel nicht mit Schmiermittel oder Öl in Kontakt steht.

5. Baugruppe (1) nach einem der vorhergehenden Ansprüche, **dadurch gekennzeichnet, dass** die Drehverbindung als Vierpunktlager ausgestaltet ist, insbesondere als Vierpunktlager mit einer Schmiegung von um etwa 94%.

6. Baugruppe (1) nach einem der vorhergehenden Ansprüche, **dadurch gekennzeichnet, dass** die Verzahnung (5) entweder als umlaufende ringförmige Verzahnung oder als teilumlaufende segmentartige Verzahnung ausgeführt ist.

7. Baugruppe (1) nach einem der vorgenannten Ansprüche, **dadurch gekennzeichnet, dass** die Drehverbindung gegen äußerliches Eindringen von Fremdkörpern und Staub oder Schmutz und andere äußere Einflüsse durch mindestens eine umlaufende Dichtungsanordnung (12,20) geschützt ist, und außerdem auch die Verzahnung derart durch mindestens eine umlaufende Dichtungsanordnung (11,21) geschützt ist.

8. Baugruppe (1) nach einem der vorhergehenden Ansprüche, **dadurch gekennzeichnet, dass** sie mit einem Antriebsaggregat (3), beispielsweise in Form eines hydraulischen oder elektrischen Antriebs mit Getriebestufe, verbunden ist, welches von der Innenseite der Nabe (53) an die Baugruppe (1) angekoppelt oder ankoppelbar ist, insbesondere an diese Baugruppe (1) angeflanscht oder angeschraubt oder angenietet oder angeschweißt ist, und durch die Umhausung der Nabe (53) von der Außenseite abgegrenzt ist, vorzugsweise jedoch durch mindestens eine verschließbare Serviceöffnung von der Außenseite für Wartungs- und Servicezwecke erreichbar ist.

9. Baugruppe (1) nach einem der vorhergehenden Ansprüche, **dadurch gekennzeichnet, dass** durch die Gehäuse- oder Zwischenscheiben (9,10) die form- und kraftschlüssige Verbindung zwischen einem Antriebsaggregat (3) und der genannten Baugruppe (1) nicht unterbrochen wird, sondern durch mindestens eine Öffnung (15) sichergestellt ist.

10. Baugruppe (1) nach einem der vorhergehenden Ansprüche, **dadurch gekennzeichnet, dass** die kreisförmigen Zwischenelemente (9,10) an der tatsächlichen Verstellbewegung des Blattes (54) keinen Anteil haben.

11. Baugruppe (1) nach einem der vorhergehenden Ansprüche, **dadurch gekennzeichnet, dass** diese Baugruppe (1) eine zylindermantelförmige Außenkontur mit einem Durchmesser (D) aufweist, wobei sich diese Baugruppe (1) hinsichtlich ihres äußeren Durchmessers (D) zwischen dem Schaft (55) des Blattes (54) und der Anschlusskonstruktion an der Nabe (53) derart einfügt, dass im Bereich dieser Ankoppelung keine Durchmesserunterschiede in Form einer nennenswerten Stufenbildung entstehen.

12. Baugruppe (1) nach einem der vorhergehenden Ansprüche als Teil einer Kleinwindenergieanlage (50), wobei diese Kleinwindenergieanlage (50) darüber hinaus umfasst:
- einen Mast oder eine Aufständerungsstruktur (51),
- eine Gondel (52) oder einen Maschinenträger mit Generator,
- eine Nabe (53),
- mehrere Blätter (54), die jeweils mit Ihrem Schaft (55) an die Nabe (53) angeschlossen sind,
- eine Sensorik (56) und/oder Instrumente zur Bestimmung der Strömung, insbesondere der Windströmung,
- mindestens einen Aktor (57) zur Nachstellung und/oder Drehung der Anlage, insbesondere in Azimut-Richtung.

## Claims

1. Assembly group (1) for the active adjustment of one rotor blade (54) each of a small wind energy plant (50) against the hub (53) comprising
- A rotary joint with two antifriction bearing rings (6, 7) being rotatable against each other that are rolling off on rolling elements (8) whereby one of the antifriction bearing rings (6, 7) is connected to one of the rotor blades (54) while the other one is connected to the hub (53) of the small wind energy plant (50),
- An encasement, with openings, where applicable, which comprises at least two enclosure or intermediate disks (9, 10) that are stiffening the assembly group,
- As well as an adjustment mechanism incorporated inside the encasement in form of a tooth system (5) at the inner curved surface of the smaller inner bearing ring as well as a pinion (4) in mesh with the latter for driving it whereby that adjustment mechanism is contained between an upper enclosure or intermediate disk (9) and a lower enclosure or intermediate disk (10),
**Characterized by** the fact that
- An inner cylindrical sheath (16) is attached or brought in at the inside of the assembly group (1) whereby the diameter of the same is smaller than the diameter of the smaller inner antifriction bearing ring (6) and which is fixed to an enclosure or intermediate disk (9, 10) so that its outer cylindrical surface is facing towards the tooth system (5) or pinion (4) respectively.

2. Assembly group (1) according to claim 1, **characterized by** the fact that the cylindrical sheath (16) consists of a strengthened steel or plastics wall.

3. Assembly group (1) according to one of the claims 1 or 2, **characterized by** the fact that the cylindrical sheath (16) is executed half-moon or three-quarter-moon shaped.

4. Assembly group (1) according to one of the claims 1 through 3, **characterized by** the fact that the inner surface of the cylindrical sheath (16) does normally not get in contact with lubricant or oil.

5. Assembly group (1) according to one of the foregoing claims, **characterized by** the fact that the rotary joint is designed as four point bearing, specifically as four point bearing with an osculation of around 94 %.

6. Assembly group (1) according to one of the foregoing claims, **characterized by** the fact that the tooth system (5) is either executed as fully circumferential ring shaped tooth system or as partly circumferential segment-like tooth system.

7. Assembly group (1) according to one of the foregoing claims, **characterized by** the fact that the rotary joint is protected against the ingress of foreign objects and dust or dirt from the outside and from other outside influences by at least one circumferential sealing arrangement (12, 20) and furthermore the tooth system (5) is protected in such a way by at least one circumferential sealing arrangement (11, 21).

8. Assembly group (1) according to one of the foregoing claims, **characterized by** the fact that it is connected with a drive assembly (3), for example in form of a hydraulic or electric drive unit with reduction gear set, which is or can be coupled to the assembly group (1) from the inside of the hub (53,) specifically is flanged or screwed or riveted or welded to that assembly group (1), and is delimitated against the outside by the enclosure of the hub (53), preferably however being accessible from the outside through at least one sealable service opening for maintenance and service purposes.

9. Assembly group (1) according to one of the foregoing claims, **characterized by** the fact that the positive locking and frictional connected connection between drive assembly (3) and the mentioned assembly group (1) is not disrupted by the enclosure or intermediate disks (9, 10), but is ensured by a at least one opening (15).

10. Assembly group (1) according to one of the foregoing claims, **characterized by** the fact that the circular intermediate disk elements (9, 10) are not taking part in the actual adjustment movement of the rotor blade (54).

11. Assembly group (1) according to one of the foregoing claims, **characterized by** the fact that the assembly group (1) exhibits a cylinder barrel shaped outer contour with a diameter (D), whereby that assembly group (1) with regard to its outer diameter is inserted between the shank (55) of the rotor blade (54) and the connection structure at the hub (53) so that no diameter differences in form of any remarkable stepping formation occur in the area of that coupling connection.

12. Assembly group (1) according to one of the foregoing claims as part of a small wind energy plant (50) whereby such small wind energy plant (50) in addition to it also comprises:
- A pylon or an elevation structure (51),
- A nacelle (52) or a main frame with generator,
- A hub (53),
- Several rotor blades (54), which each are connected to the hub (53) via their the shank (55),
- A sensor system (56) and/or instruments for the determination of flow, specifically of the wind flow,
- At least one actuator (57) for readjustment and/or rotating of the plant, specifically in azimuth direction.

## Revendications

1. Bloc (1) pour le réglage actif de respectivement une pale (54) d'une petite éolienne (50) par rapport à son moyeu (53), comprenant
- un raccord rotatif comportant deux bagues de palier de roulement (6, 7) pouvant tourner dans des sens opposés qui roulent sur des corps de roulement (8), en ce que l'une des bagues de palier de roulement (6, 7) est reliée à une pale (54), l'autre au moyeu (53) de la petite éolienne (50),
- un boîtier, le cas échéant présentant des ouvertures, qui comporte au moins deux rondelles intermédiaires ou de boîtier (9, 10) renforçant le bloc,
- ainsi qu'un mécanisme de réglage logé à l'intérieur du boîtier en forme de denture (5) au niveau de la circonférence intérieure de la plus petite bague de palier de roulement intérieure (6) ainsi que d'un pignon (4) s'y engrenant pour son entraînement, en ce que le mécanisme de réglage se trouve entre une rondelle intermédiaire ou de boîtier supérieure (9) et une rondelle intermédiaire ou de boîtier inférieure (10),
**caractérisé en ce que**
- une enveloppe (16) est montée ou introduite à l'intérieur du bloc (1), dont le diamètre est inférieur au diamètre de la plus petite bague de palier de roulement intérieure (6), et qui est fixée à une rondelle intermédiaire ou de boîtier (9, 10) de façon telle que sa face extérieure soit tournée vers la denture (5) ou le pignon (4).

2. Bloc (1) selon la revendication 1, **caractérisé en ce que** l'enveloppe (16) se compose d'une paroi en acier ou en matière plastique renforcée.

3. Bloc (1) selon l'une des revendications 1 ou 2, **caractérisé en ce que** l'enveloppe (16) est réalisée en forme de demi-lune ou en forme de trois quarts de lune.

4. Bloc (1) selon l'une des revendications 1 à 3, **caractérisé en ce que** la face intérieure de l'enveloppe (16) en règle générale n'est pas en contact avec un lubrifiant ou huile.

5. Bloc (1) selon l'une des revendications précédentes, **caractérisé en ce que** le raccord rotatif est réalisé sous forme de palier quatre points, en particulier sous forme de palier quatre points présentant une osculation d'approximativement 94%.

6. Bloc (1) selon l'une des revendications précédentes, **caractérisé en ce que** la denture (5) est réalisée soit comme denture annulaire périphérique ou comme denture en forme de segments partiellement périphérique.

7. Bloc (1) selon l'une des revendications précédentes, **caractérisé en ce que** le raccord rotatif est protégé contre toute pénétration extérieure de corps étrangers et de poussière ou d'impuretés et autres influences extérieures par au moins un ensemble d'étanchéité périphérique (12, 20), et en outre la denture est également protégée par au moins un ensemble d'étanchéité périphérique (11,21).

8. Bloc (1) selon l'une des revendications précédentes, **caractérisé en ce qu'**il est relié à un groupe d'entraînement (3), par exemple sous forme d'un entraînement hydraulique ou électrique avec rapport de réduction, qui est accouplé ou peut être accouplé à partir de la face intérieure du moyeu (53) au bloc (1), en particulier bridé ou vissé ou riveté ou soudé à ce bloc (1), et est délimité de la face extérieure par le carénage du moyeu (53), étant toutefois accessible de préférence par au moins une ouverture de maintenance verrouillable depuis la face extérieure à des fins de maintenance et de service.

9. Bloc (1) selon l'une des revendications précédentes, **caractérisé en ce que** la liaison directe et adhérente entre un groupe d'entraînement (3) et ledit bloc (1) n'est pas interrompue par les rondelles intermédiaires ou du boîtier (9, 10), mais est assurée par au moins une ouverture (15).

10. Bloc (1) selon l'une des revendications précédentes, **caractérisé en ce que** les éléments intermédiaires circulaires (9, 10) ne participent pas au mouvement de réglage réel de la pale (54).

11. Bloc (1) selon l'une des revendications précédentes, **caractérisé en ce que** bloc (1) présente un contour extérieur en forme d'enveloppe de cylindre d'un diamètre (D), **en ce que** ce bloc (1) par rapport à son diamètre extérieur (D) entre l'arbre (55) de la pale (54) et la structure de raccordement au moyeu (53) s'insère de manière telle qu'il ne résulte pas de différences de diamètre sous forme de formation d'étage notable au niveau de cet accouplement.

12. Bloc (1) selon l'une des revendications précédentes en tant qu'élément d'une petite éolienne (50), en ce que cette petite éolienne (50) comporte en outre :
- un mât ou une structure de surélévation (51),
- une nacelle (52) ou un support mécanique avec alternateur,
- un moyeu (53),
- plusieurs pales (54) qui sont raccordées par leur arbre (55) au moyeu (53),
- des capteurs (56) et/ou des instruments pour la détermination du courant, en particulier du courant de vent,
- au moins un actionneur (57) pour le réglage et/ou la rotation de l'éolienne, en particulier en sens azimut.
